# EUROPÄISCHE PATENTSCHRIFT

(11) **EP 2 233 449 B1**
(45) Veröffentlichungstag und Bekanntmachung des Hinweises auf die Patenterteilung: **17.12.2014**
(21) Anmeldenummer: 09156533.3
(22) Anmeldetag: 27.03.2009
(51) Int. Cl.: C04B 35/63, B29C 67/00

(54) **Verwendung eines Schlickers für die Herstellung von Dentalkeramiken mittels Hot-Melt-Inkjet-Druckverfahren**
Use of a slip for the production of dental ceramics with hot melt inkjet printing methods
Utilisation d'une barbotine pour la fabrication de céramiques dentaires à l'aide du procédé d'impression par injection de matière thermoplastique

(43) Veröffentlichungstag der Anmeldung: 29.09.2010
(73) Patentinhaber: Ivoclar Vivadent AG, 9494 Schaan (LI)
(72) Erfinder: Laubersheimer, Jürgen Dr., 9470, Buchs (CH); Zappini, Gianluca Dr., 38069, Torbole sul Garda (TN) (IT); Rheinberger, Volker Dr., 9490, Vaduz (CH)
(74) Vertreter: UEXKÜLL & STOLBERG

(56) Entgegenhaltungen:
- WO-A-98/06560

## Beschreibung

Die vorliegende Erfindung betrifft einen Schlicker zur Verwendung in einem Hot-Melt-Inkjet-Druckverfahren, insbesondere für die Herstellung von Keramikformteilen, wie z.B. dentalen Inlays, Onlays, Veneers, Kronen, Brücken und Gerüsten.

Die Herstellung keramischer Formteile kann auf verschiedenen Wegen und durch unterschiedliche Prozesse erfolgen. Entscheidend für die Wahl des geeigneten Formgebungsverfahrens sind die für das jeweilige Stoffsystem zu Verfügung stehenden Rohprodukte, die Größe, die geforderte Präzision und Detailtreue der herzustellenden Bauteile und nicht zuletzt wirtschaftliche Aspekte.

Bei der Herstellung von naturgemäß kleinen keramischen Formteilen für Zahnersatz sind die Anforderungen an die Bauteilpräzision und die Detailgenauigkeit sehr hoch. Es werden meist für die medizinische bzw. dentale Verwendung geeignete biokompatible Keramiken in spezieller feiner, hochreiner Form als Rohstoff dazu eingesetzt.

Traditionell ist die Herstellung von dentalen Restaurationen handwerklich geprägt. Zahnärzte entfernen geschädigte Zahnsubstanz und ersetzten diese mit plastischen Füllungsmaterialien (Amalgam, Composite). Bei größeren Defekten wird die Restauration von einem Zahntechniker hergestellt. Diese sogenannte indirekte Herstellung wird über Abdrücke und Modelle vorgenommen, und es dauert in der Regel einige Tage, bis die Restauration im Mund des Patienten eingesetzt werden kann. Diese traditionelle handwerkliche Herstellung ist zeitintensiv, teuer und für den Patienten mit mehreren Sitzungen beim Zahnarzt verbunden. Zudem kann die Qualität der zahntechnischen Arbeit kaum kontrolliert werden. Zur Kostenreduktion ist in den letzten Jahren vermehrt zahntechnische Arbeit in Billiglohnländer verlegt worden.

Seit einigen Jahren besteht auch die Möglichkeit, Zahnersatz "automatisiert" mit CAD/CAM Systemen herzustellen. Nach einer digitalen Abdrucknahme (Scannen im Mund des Patienten oder an einem Duplikatmodell) kann der Zahnersatz auf Basis der Scandaten mit einer Fräsmaschine aus Vollmaterial gefräst bzw. geschliffen werden. Bei kleinen Arbeiten ist dies sogar direkt am Patientenstuhl möglich. Dadurch werden die Wartezeiten für den Patienten deutlich verkürzt und Qualitätskontrollen können in der Software berücksichtigt werden. Diese abtragenden Herstellungsverfahren haben allerdings den Nachteil, dass der größte Teil der eingesetzten Hochleistungskeramik verloren geht. Zudem sind die eingesetzten Maschinen bis dato teuer, laut und wartungsintensiv.

Anstelle der material- und werkzeugintensiven abtragenden Verfahren könnten sogenannte "aufbauende Verfahren" eingesetzt werden. Als Synonym für diese "aufbauenden" Möglichkeiten werden oftmals die Begriffe "Rapid Prototyping", "Rapid Manufacturing", "Solid Free Form Fabrication" oder "Generative Fertigungsverfahren" verwendet. Unter den zuvor genannten Begriffen werden verschiedene generative Fertigungsverfahren zusammengefasst, bei denen aus computergestützten Konstruktionsdaten (CAD-Daten) 3-dimensionale Modelle oder Bauteile hergestellt werden (A. Gebhardt, Vision of Rapid Prototyping, Ber. DGK 83 (2006) 7-12). Beispiele für typische Rapid-Prototyping-Verfahren sind Stereolithographie, 3-D-Printing und Inkjet-Modeling. Das Prinzip des Rapid Prototyping beruht auf dem schichtweisen Aufbau eines dreidimensionalen Bauteils. Dabei werden zweidimensionale Schichten (XY-Ebene) aufeinandergelegt. Je nach Dicke der Schichten entsteht in Baurichtung (Z-Richtung) eine mehr oder minder starke Abstufung des Bauteils. Es wird erwartet, dass die Herstellung deutlich kosteneffizienter umzusetzen ist als mit abtragenden Verfahren. Das Hauptsparpotential liegt in der Materialeinsparung. Zudem erlauben aufbauende Verfahren eine parallele Fertigung, die eine signifikante Zeitersparnis und Erhöhung der Produktivität bringen wird.

Neben der Stereolithographie (US 5,496,682 A; US 6,117,612 A) ist auch das 3-D-Printing (3-D-Drucken) ein verbreitetes Verfahren zur Herstellung von keramischen Formteilen. Bei diesem Verfahren wird eine Bindemittellösung in ein Pulverbett gedruckt. Die Bindemittel verkleben die Pulverteilchen und bilden so eine verfestigte zweidimensionale Struktur aus Pulver. Nach jeder so hergestellten Schicht wird eine neue Schicht loses Pulver auf die 2D-Struktur aufgebracht, in die wiederum Bindemittel verdüst wird. Durch viele Wiederholungen dieses Schrittes entsteht ein aus vielen Schichten aufgebautes dreidimensionales Objekt, das durch Entfernen des nicht verfestigten Pulvers leicht freigelegt werden kann. Bei Verwendung von keramischem Pulver muss das Bindemittel ausgebrannt und die Keramik nachfolgend durch einen Sinterprozess verdichtet werden.

Zwar wird in US 6,322,728 B1 ein 3-D-Druckverfahren als zur Herstellung einer dentalen Restauration geeignet beschreiben, aufgrund der geringen Packungsdichte des Pulverbetts und der dadurch resultierenden hohen Porosität des 3-D-Objektes nach dem Ausbrennen des Bindemittels ist es allerdings im Allgemeinen sehr schwierig, daraus einen dichten Sinterkörper zur erhalten. Üblicherweise sind nach diesem Verfahren Formkörperdichten von weniger als 50% der theoretischen Dichte nach dem Entbindern und Dichten und von weniger als 95% der theoretischen Dichte nach dem Dichtsintern erreichbar. Diese geringen Dichten der gewünschten Werkstücke bewirken eine nur ungenügende Endfestigkeit und sind somit als Dentalwerkstücke kaum verwendbar.

Ein weiteres generatives Fertigungsverfahren, das zur Herstellung von keramischen Formteilen geeignet ist, ist das Inkjet-Printing oder Inkjet-Modelling, bei mehreren Druckköpfen auch als Multi-Jet-Modellling oder -Printing bezeichnet. Dabei werden, analog dem Prinzip der aus dem Büroalltag bekannten klassischen Tintenstrahldrucker, direkt 3-D-Objekte gedruckt, indem durch eine oder mehrere Düsen flüssige, auch polymerisierbare Modellmaterialien ("Tinten") in definierten Tropfen abgegeben werden, die Tinte aushärtet und so die Schichten in der XY-Ebene bildet. Simultan kann ein leicht entfernbares Stützmaterial verdruckt werden. Durch wiederholtes Übereinanderdrucken von Schichten aus Modell- und gegebenenfalls Stützmaterial entsteht ein dreidimensionales Objekt. Nach Trennen des gedruckten Objektes von der Stützstruktur, beispielsweise durch selektives chemisches Lösen des Stützmaterials, liegt ein 3-D-Bauteil vor.

Die verwendeten Tinten müssen bei der Temperatur in der Druckdüse sehr dünnflüssig (niedrigviskos) sein. Weiterhin sollten geeignete Tinten möglichst keine Partikel enthalten, da sonst die Düsen, die typischerweise einen Durchmesser von etwa 100 µm oder kleiner aufweisen, verstopfen können und eine Fortführung des Druckprozesses verhindert wird. Im Falle von Füllstoff enthaltenden Tinten, also Suspensionen von Partikeln in einer Flüssigkeit, können daher bisher meist nur sehr gering gefüllte Suspensionen verwendet werden, wobei die Partikel selbst sehr klein sein müssen, in der Regel < 1 µm, mindestens aber deutlich kleiner als der mittlere Durchmesser der Düse (als Richtwert werden seitens der Druckkopf-Hersteller 1/20 des mittleren Düsendurchmessers angegeben). Die Verwendung von feinen Partikeln als Füllstoff hat allerdings zur Folge, dass die Viskosität der Tinte ansteigt und ein Verdrucken aus diesem Grund erschwert oder verhindert wird.

Als keramikgefüllte Tinten für das Inkjet-Printing von 2-D-Schichten oder 3-D-Objekten werden bislang Suspensionen (Schlicker) verwendet, die nur wenige Gew.-% an Füllstoff enthalten. In einfachen Fällen sind dies Suspensionen auf Basis von Wasser oder niederen Alkoholen, bei deren Verwendung allerdings zwar sehr dünne Schichten mit geringer Höhe erzeugt werden können, jedoch häufig keine dreidimensionalen Körper im eigentlichen Sinne. Zudem treten dabei oft Defekte oder Risse infolge der Trocknung der gedruckten Strukturen auf.

Häufig werden daher zum Drucken von 3-D-Objekten auch Wachse eingesetzt, die im Hot-Melt-Inkjet-Druckverfahren verdruckt werden. Die Wachse sind bei den erhöhten Temperaturen im Druckkopf sehr dünnflüssig und erstarren bei oder unmittelbar nach dem Auftreffen auf der zu bedruckenden Oberfläche. Im Falle von Wachsen als Dispergiermittel sind auch höhere Füllgrade von etwa 20-30 Vol.% realisierbar, wobei auch (oxid)-keramische Pulver als Füllstoffe eingesetzt werden können. Die durch den hohen Füllgrad zwangsläufig hohe Viskosität der gefüllten Wachse wird dadurch zu kompensieren versucht, dass man bei vergleichsweise sehr hohen Temperaturen von 140 °C und höher druckt. Dabei werden einerseits die Druckköpfe und deren Komponenten wie Zuleitung und Düse einer hohen Belastung ausgesetzt, andererseits ist es selbst bei den genannten, vergleichsweise hohen Füllgraden an keramischem Pulver sehr schwierig, wenn nicht unmöglich, aus den gedruckten 3-D-Objekten dichte, feste keramische Bauteile zu erhalten. Mit dem anschließenden Ausbrennen der organischen Bestandteile geht zudem meist eine signifikante Verformung der gedruckten Bauteile einher und außerdem ist die nachfolgende Porosität der entbinderten Formteile zu hoch, d. h. die keramische Dichte zu gering, um durch einen sich anschließenden Sinterprozess ein dichtes Gefüge herzustellen.

DE 10 2006 015 014 offenbart ein Verfahren zur Herstellung keramischer Formkörper durch lagenweises Inkjet-Drucken einer Suspension, die 50 bis 80 Gew.-% Keramikteilchen, ein wässriges Böhmitsol, einen niedermolekularen Alkohol, einen Trocknungshemmer und einen organischer Verflüssiger enthält, anschließendes Trocknen und Aushärten (Sintern) des Lagenverbunds. Vorzugsweise wird jede einzelne Lage vor Aufbringen der nächsten Lage und nach Aufbau des dreidimensionalen Körpers dieser insgesamt nochmals getrocknet. Das Verfahren soll sich zur Herstellung von Zahnimplantaten, -inlays, -kronen und -brücken eignen. Nachteilig ist der enorm hohe Zeitaufwand dieses Verfahren, da jede einzelne aufgedruckte Schicht getrocknet werden muss. Ferner entsprechen die angeblich mit dem Verfahren erzielten theoretischen Dichten der gesinterten Formkörper von bis zu 98 % nur mäßigen Festigkeitswerten.

Seerden et al. (J. Am. Ceram. Soc. 84 [11], 2514-2520 (2001) beschreiben, dass mittels Hot-Melt-Inkjet-Drucken von Al₂O₃-Wachsschlickern mit einem Füllgrad von bis zu 30 Vol.-% ungebrannte keramische Körper mit einer Dimensionsgenauigkeit von < 100 µm erhalten werden können. Es wird weder das Verhalten der so erzeugten 3-D-Objekte beim Entbindern und Sintern beschrieben, noch die Eigenschaften der gesinterten Keramikformteile. Die Herstellung von Dentalrestaurationsmaterialien wird nicht offenbart.

Die Aufgabe der Erfindung besteht darin, die Nachteile des bekannten Standes der Technik zu überwinden und einen keramischen Schlicker zur Verfügung zu stellen, der sich mittels Inkjet-Drucken verarbeiten lässt. Insbesondere sollen mit dem Schlicker in den nachfolgenden Bearbeitungsschritten, Entbindern und Dichtsintern, Keramikformteile mit guter Detailtreue, homogenem Gefüge und hoher Enddichte von > 98 % der theoretischen Dichte und somit hoher Endfestigkeit hergestellt werden können.

Die Aufgabe wird gelöst durch die Verwendung eines Schlickers zur Herstellung von Keramikformteilen mit einem Hot-Melt-Inkjet-Druckverfahren, der (A) Keramikpartikel, (B) Wachs und zusätzlich (C) mindestens ein radikalisch polymerisierbares Monomer enthält, wobei es sich bei den Keramikformteilen um Dentalrestaurationen handelt.

Ferner betrifft die vorliegende Erfindung auch ein Verfahren zur Herstellung von Dentalrestaurationen, bei dem man den Schlicker schichtweise zur geometrischen Form eines Grünlings formt und dann einer radikalischen Polymerisation unterwirft, um einen gehärteten Grünling zu erhalten. Der schichtweise Aufbau des Grünlings erfolgt durch ein schichtweises Hot-Melt-Inkjet-Druckverfahren, die Härtung vorzugsweise durch Photopolymerisation. Zur Herstellung eines Keramikformteils wird Grünling weiterverarbeitet, indem man den Grünling einer Wärmebehandlung zum Entfernen des Bindemittels (Entbinderung) unterwirft, um einen Weißling zu erhalten, und man den Weißling dann dichtsintert.

Komponente (A) des erfindungsgemäß verwendeten Schlickers sind Keramikpartikel, wobei der Begriff "Keramikpartikel" sowohl Oxidkeramikpartikel als auch Glaskeramikpartikel und deren Mischungen umfasst sind. Unter Keramiken werden anorganische Werkstoffe verstanden, die eine kristalline Struktur aufweisen und meist aus entsprechenden Pulvern hergestellt werden. Vorzugsweise erfolgt die Herstellung der Keramik durch Sintern (Sinterkeramik). Oxidkeramiken werden vorzugsweise durch Sintern von Metalloxidpulvern wie z.B. ZrO₂ oder Al₂O₃ erhalten. Glaskeramiken enthalten neben einer kristallinen Phase zusätzlich auch eine oder mehrere Glasphasen enthalten. Bei Glaskeramiken handelt es sich um Werkstoffe, die meist aus amorphen Gläsern, insbesondere Silikatgläsern, durch gesteuerte Kristallisation hergestellt werden und bei denen Glasphase und eine oder mehrere Kristallphasen im Festkörper nebeneinander vorliegen. Bei sinterbaren Glaskeramiken kann sowohl von Glaspulvern als auch von Glaskeramikpulvern ausgegangen werden. Geeignete Glaskeramikpartikel sind beispielsweise sinterbare Glaskeramikpartikel auf Basis von Leucit- oder Lithiumdisilicat-verstärkten Gläsern.

Bei den als Komponente (A) eingesetzten Keramikpartikeln handelt es sich vorzugsweise um Oxidkeramikpartikel, insbesondere auf der Basis von ZrO₂ und/oder Al₂O₃, beispielsweise Oxidpartikel aus reinem ZrO₂, reinem Al₂O₃, reinem ZrO₂-Al₂O₃, ZrO₂ oder ZrO₂-Al₂O₃, das mit HfO₂, CaO, Y₂O₃, CeO₂ und/oder MgO stabilisiert ist. Der Begriff "rein" ist im Sinne von "chemisch rein" zu verstehen, d.h. eine ZrO₂- bzw. Al₂O₃-Keramik ist nur aus ZrO₂ bzw. Al₂O₃ aufgebaut. Stabilisierte Keramiken enthalten neben dem Basisoxid wie ZrO₂ oder Al₂O₃ ein Stabilisisierungsmittel, das vorzugsweise aus CaO, Y₂O₃, CeO₂, MgO und Mischungen davon ausgewählt ist. Das Stablilisierungsmittel wird vorzugsweise in einer Menge von 3 bis 5 Gew.-% eingesetzt, bezogen auf die Masse der stabilisierten Keramik. Hochfeste ZrO₂-Keramike enthalten zur Stabilisierung der tetragonalen Kristallstruktur vorzugsweise 3 bis 5 Gew.-% Y₂O₃ (Yttriumoxid). Diese ZrO₂-Keramik wird als Y-TZP (Yttrium Stabilized Tetragonal Zirconium Dioxide Polycrystals) bezeichnet. Keramikpartikel, die nur Basisoxid und Stabilisierungsmittel enthalten, sind besonders bevorzugt.

Die Keramikpartikel sollten deutlich kleiner als der mittlere Durchmesser der Düse des Druckkopfs des Inkjet-Druckers sein, mit dem der Schlicker verdruckt wird. Um das Verdrucken mit gängigen Inkjet-Druckern, die einen Düsendurchmesser von etwa 100 µm oder kleiner aufweisen, zu ermöglichen, werden in dem erfindungsgemäßen Schlicker bevorzugt sogenannte Submikron-Pulver eingesetzt, d.h. Keramikpartikel mit einer maximalen Partikelgröße von kleiner oder gleich 5 µm, insbesondere kleiner oder gleich 1 µm. Vorzugsweise weisen die Partikel eine Größe von 0,01 bis 5 µm, besonders bevorzugt von 0,1 bis 1 µm und ganz besonders bevorzugt von 0,3 bis 0,6 µm auf.

Unter "Partikelgröße" ist die tatsächliche Größe der Keramikteilchen zu verstehen, so wie sie in dem Schlicker vorliegen. Typischerweis ist dies die Primärpartikelgröße, da eventuell im Keramikpulver vorhandene Agglomerate bei der Herstellung des Schlickers weitgehend in Primärpartikel zerlegt werden. Es können jedoch auch Agglomerate von Keramikprimärteilchen im Schlicker vorliegen, solange sie genügend klein sind, um mit den gewünschten Inkjet-Düsen verdruckt werden zu können, d.h. in bevorzugten Ausführungsformen erfüllen die Agglomerate als Ganzes die obigen Partikelgrößenbedingungen.

Bei Al₂O₃ liegt die Größe der als Komponente (A) verwendeten Partikel vorzugsweise im Bereich von 50 bis 500 nm, besonders bevorzugt zwischen 75 und 200 nm; bei mit Y₂O₃ stabilisiertem ZrO₂ im Bereich von 50 und 500 nm, ganz bevorzugt zwischen 50 und 350 nm.

Bei den Partikelgrößen handelt es sich um die absoluten Ober- und Untergrenzen.

Die Keramikpartikel sind vorzugsweise annähernd kugelförmig. Es ist weiterhin günstig, wenn die Partikel in nicht agglomerierter Form vorliegen, beispielsweise ganz oder überwiegend in Form von Primärpartikeln.

Ein Beispiel für bevorzugte Keramikpartikel sind Oxidpartikel aus mit Y₂O₃ stabilisiertem ZrO₂, die z.B. unter der Handelsbezeichnung TZ-3YS-E von Tosoh Corporation, Tokyo, JP, erhältlich sind.

Komponente (B) des erfindungsgemäß verwendeten Schlickers ist ein Wachs. In der vorliegenden Erfindung ist der Begriff "Wachs" so zu verstehen, wie er von der Deutschen Gesellschaft für Fettwissenschaft in der DGF-Einheitsmethode M-I 1 (75) festgelegt wurde. Da die chemische Zusammensetzung und Herkunft verschiedener Wachse sehr unterschiedlich ist, definiert man Wachse nur über ihre mechanisch-physikalischen Eigenschaften. Ein Stoff wird als Wachs bezeichnet, wenn er bei 20 °C knetbar, fest bis brüchig hart, eine grobe bis feinkristalline Struktur aufweist, farblich durchscheinend bis opak, jedoch nicht glasartig ist; über 40 °C ohne Zersetzung schmilzt, schon wenig oberhalb des Schmelzpunktes leicht flüssig (niedrigviskos) und nicht fadenziehend ist; eine stark temperaturabhängige Konsistenz und Löslichkeit aufweist, sowie unter leichtem Druck polierbar ist. Typischerweise gehen Wachse zwischen 40 °C und 130 °C in den schmelzflüssigen Zustand über; Wachse sind in der Regel wasserunlöslich. Vorzugsweise haben Wachse zur Verwendung in dem erfindungsgemäßen Schlicker einen Schmelzpunkt im Bereich von 40 bis kleiner 80 °C, besonders bevorzugt von 45 bis 65 °C und ganz besonders bevorzugt von 54 bis 56 °C. Bevorzugte Wachse haben bei 80 °C und einer Scherrate von 1000 s⁻¹ eine Viskosität von ≤ 10 mPa·s, insbesondere von 5 bis 10 mPa·s und besonders bevorzugt von 3 bis 4 mPa·s.

Je nach ihrer Herkunft teilt man Wachse in drei Hauptgruppen ein: natürliche Wachse, wobei hier wiederum zwischen pflanzlichen und tierischen Wachsen, Mineralwachsen und petrochemischen Wachsen unterschieden wird; chemisch modifizierte Wachse und synthetische Wachse. Das als Komponente (B) in dem erfindungsgemäßen Schlicker eingesetzte Wachs kann aus einer Wachsart oder auch aus Mischungen verschiedener Wachsarten bestehen. In der vorliegenden Erfindung werden bevorzugt petrochemische Wachse, wie etwa Paraffinwachs (Hartparaffin), Petrolatum, Mikrowachs (Mikroparaffin) und deren Mischungen, besonders bevorzugt Paraffinwachs verwendet. Gut geeignet sind Paraffinwachse, die als Spritzgussbinder zur Fertigung von oxidkeramischen und nichtoxidkeramischen Bauteilen im Heißgießverfahren (Niederdruckspritzguss) kommerziell erhältlich sind, z. B. Paraffinwachs mit einem Schmelzpunkt ca. 54-56 °C, einer Viskosität von 3-4 mPa·s bei 80°C und einer Scherrate von 1000 s⁻¹, das u.a. von Zschimmer & Schwarz (Lahnstein, DE) unter der Bezeichnung SILIPLAST bezogen werden kann. Häufig enthalten kommerziell erhältliche Wachse bereits Emulgatoren und/oder weitere Komponenten zur Anpassung der Rheologie.

Als Wachskomponente (B) können auch pflanzliche Wachse, z.B. Candelillawachs, Carnaubawachs, Japanwachs, Espartograswachs, Korkwachs, Guarumawachs, Reiskeimölwachs, Zuckerrohrwachs, Ouricurywachs, Montanwachs; tierische Wachse, z.B. Bienenwachs, Schellakwachs, Walrat, Lanolin (Wollwachs), Bürzelfett; Mineralwachse, z.B. Ceresin, Ozokerit (Erdwachs); chemisch modifizierte Wachse, z.B. Montanesterwachse, Sasolwachse, hydrierte Jojobawachse, oder synthetische Wachse, z.B. Polyalkylenwachse, Polyethylenglykolwachse, verwendet werden.

Kompenente (C) des erfindungsgemäß verwendeten Schlickers ist mindestens ein radikalisch polymerisierbares Monomer. Vorzugsweise ist das Monomer bei 20°C fest und hat einen Schmelzpunkt im Bereich von 30 bis 120 °C, besonders bevorzugt von 40 bis 80°C und insbesondere von ca. 50 °C. Vorzugsweise ist das Monomer sowohl im festen als auch im flüssigen Zustand homogen, d.h. ohne Phasentrennung, mit dem Wachs (B) mischbar. Das Monomer sollte sich bei Verarbeitungstemperatur, etwa der später beschriebenen Temperatur beim Inkjet-Drucken, nicht zersetzen. Typischerweise besitzt das Monomer einen großen unpolaren Rest, z.B. einen C₈- bis C₂₀-Rest. Häufig haben geeignete Monomere ein wachsartiges Aussehen und eine wachsartige Konsistenz.

Insbesondere kommen in dem erfindungsgemäß verwendeten Schlicker Monomere zur Verwendung, die ein oder mehrere, z.B. zwei, (Meth)acryloyl-Gruppen aufweisen, wobei Monomere mit (Meth)acryloyloxy-Gruppen bevorzugt sind. Beispiele für geeignete radikalisch polymerisierbare Monomere sind (Meth)acrylate und Di(meth)acrylate mit einer Kettenlänge des Alkoholrests von C₈ bis C₁₈, wie etwa Octadecylacrylat; mehrfach (meth)acrylierte Glykole, insbesondere mehrfach (meth)acrylierte Propylenglykole; mehrfach (meth)acrylierte kurz- bis mittelkettige Polypropylenglykole mit einem bevorzugten M_{w} von 200-2000, besonders bevorzugt 700-1000, wie etwa Dipropylenglykoldiacrylat und Polypropylenglykoldiacrylate, z.B. Polypropylenglykol-700-diacrylat; Pentaerythritdi(meth)-acrylat-Monocarboxylate mit einer Kettenlänge von C₈ bis C₁₈, wie etwa Pentaerythritdiacrylat-Monostearat, und deren Mischungen. Die acrylierten Monomere sind gegenüber den methacrylierten Monomeren bevorzugt, insbesondere sind die zuvor genannten acrylierten Monomere bevorzugt. In einer Ausführungsform der vorliegenden Erfindung ist Komponente (C) eine Mischung aus Octadecylacrylat und Pentaerythritdiacrylat-Monostearat.

Der Füllgrad einer bevorzugten Schlickerzusammensetzung beträgt 25 bis 45 Vol.-%, vorzugsweise 30 bis 40 Vol.-% Keramikpartikel bezogen auf das Gesamtvolumen des Schlickers.

Eine typische Schlickerzusammensetzung gemäß der vorliegenden Erfindung enthält:
(A) 25 bis 45 Vol.-%, vorzugsweise 30 bis 40 Vol.-%, insbesondere 33 bis 38 Vol.-% Keramikpartikel,
(B) 25 bis 50 Vol.-%, vorzugsweise 30 bis 45 Vol.-%, insbesondere 30 bis 35 Vol.-% Wachs, und
(C) 10 bis 40 Vol.-%, vorzugsweise 15 bis 30 Vol.-%, insbesondere 22 bis 27 Vol.-% eines oder mehrerer radikalisch polymerisierbarer Monomere,
jeweils bezogen auf die Gesamtzusammensetzung des Schlickers.

Vorzugsweise enthält der erfindungsgemäß verwendete Schlicker als Komponente (D) einen Polymerisationsinitiator.

Geeignete Polymerisationsinitiatoren sind radikalische Polymerisationsinitiatoren, insbesondere Photoinitiatoren. Es können die bekannten radikalischen Photoinitiatoren für den sichtbaren Bereich (vgl. J.P. Fouassier, J.F. Rabek (Hrsg.), Radiation Curing in Polymer Science and Technology, Vol. II, Elsevier Applied Science, London und New York 1993) verwendet werden, wie z.B. Acyl- der Bisacylphosphinoxide, vorzugsweise α-Diketone, wie 9,10-Phenanthrenchinon, Diacetyl, Furil, Anisil, 4,4'-Dichlorbenzil und 4,4'-Dialkoxybenzil und Campherchinon. Zur Beschleunigung der Initiierung werden α-Diketone vorzugsweise in Kombination mit aromatischen Aminen verwendet. Redoxsysteme, die sich besonders bewährt haben, sind Kombinationen aus Campherchinon mit Aminen, wie N,N-Dimethyl-p-toluidin, N,N-Dihydroxyethyl-p-toluidin, 4-Dimethylaminobenzoesäureethylester oder strukturverwandte Systeme.

Besonders bevorzugte Photoinitiatoren sind Norrish-Typ-I-Photoinitiatoren, vor allem Monoacyltrialkyl- oder Diacyldialkylgermanium-Verbindungen, wie z.B. Benzoyltrimethylgermanium, Dibenzoyldiethylgermanium oder Bis(4-methoxy-benzoyl)diethylgermanium. Dabei lassen sich auch Mischungen der verschiedenen Photoinitiatoren einsetzen, wie z.B. Dibenzoyldiethylgermanium in Kombination mit Campherchinon und 4-Dimethylaminobenzoesäureethylester.

Der Polymerisationsinitiator (D) wird vorzugsweise in einer Menge von 0,001 bis 3,0 Vol.-%, ganz besonders bevorzugt 0,01 bis 1 Vol.-% eingesetzt, jeweils bezogen auf die Gesamtmasse des Schlickers.

Neben den zuvor genannten Komponenten kann der erfindungsgemäß verwendete Schlicker optional weitere Additive (E), wie etwa Beschleuniger (Aktivatoren), Stabilisatoren (Inhibitoren), Dispergierhilfsmittel, Emulgatoren, schmelzviskositätserniedrigende Substanzen (Komponente zur Anpassung der Rheologie), farbgebende Komponenten und deren Kombinationen, enthalten.

Geeignete Beschleuniger sind beispielsweise die oben im Zusammenhang mit den Polymerisationsinitiatoren genannten.

Die Inhibitoren bzw. Stabilisatoren verbessern die Lagerstabilität der Schlicker und verhindern darüber hinaus eine unkontrollierte Polyreaktion. Die Inhibitoren werden vorzugsweise in einer solchen Menge zugesetzt, dass die Schlicker über einen Zeitraum von ca. 2-3 Jahre lagerstabil sind. Beispiele für geeignete Inhibitoren umfassen das 2,2,6,6-Tetramethyl-piperindin-1-oxyl-Radikal (TEMPO), Phenothiazin, Iod und Cupfer-(I)-iodid Bevorzugt werden die Inhibitoren in einer Menge von 5 bis 500 Gew.-ppm, besonders bevorzugt 50 bis 200 Gew.-ppm eingesetzt, jeweils bezogen auf die Gesamtmasse des(der) Monomers(e). Bezogen auf die Gesamtzusammensetzung des Schlickers werden die Inhibitoren vorzugsweise in einer Menge von 0,03 bis 3 Vol.-%, vorzugsweise 0,3 bis 1,2 Vol.-% eingesetzt.

Als Dispergierhilfsmittel können alle üblichen Dispergierhilfsmittel zum Dispergieren von oxidischen Teilchen in einem unpolaren Medium eingesetzt werden. Typischerweise weisen geeignete Dispergierhilfsmittel ein polare "Ankergruppe", die an der Partikeloberfläche gebunden werden kann, und eine unpolare, vom Partikel weg weisende Gruppe, die eine maximale sterische Stabilisierunug der Suspension bewirkt, auf. Bevorzugte Dispergierhilfsmittel sind Dispergierhilfsmittel auf Polyesterbasis, wie z. B. Hypermer LP-1 von Uniqema, GB. Das Dispergierhilfsmittel wird vorzugsweise in einer Menge von 0,1 bis 5 Gew.-%, vorzugsweise 0,5 bis 2 Gew.-% und insbesondere 1 bis 1,5 Gew.-% eingesetzt, jeweils bezogen auf die Gesamtmasse an Keramikpartikeln. Bezogen auf die Gesamtzusammensetzung des Schlickers werden Dispergierhilfsmittel vorzugsweise in einer Menge von 0,3 bis 16 Vol.-%, vorzugsweise 1,6 bis 6,4 Vol-% und insbesondere 3,2 bis 4,8 Vol.-% eingesetzt.

Eine schmelzviskositätserniedrigende Substanz kann zu dem erfindungsgemäßen Schlicker gegeben werden, um dessen Viskosität im flüssigen Zustand zu erniedrigen. Hierzu geeignet sind beispielsweise längerkettige (C₈-C₂₀), bei Raumtemperatur feste Olefine mit niedrigem Schmelzpunkt, wie etwa Hexadecen und Octadecen.

Als farbgebende Komponente sind die üblichen Farbstoffe oder Pigmente erfindungsgemäß nicht geeignet, da sie nicht genügend stabil sind, um den Entbinderungs- oder Sinterungsprozess zu überstehen. Erfindungsgemäß werden als farbgebende Komponente reaktive Übergangsmetallverbindungen eingesetzt, die im Wachs löslich sind und den Verlauf der Photohärtung nicht nachteilig beeinflussen und die andererseits während der Entbinderung des hergestellten Keramikgrünlings oder der Sinterung des daraus erhaltenen Keramikweißlings farbgebende Übergangsmetallionen bilden. Als farbgebende Komponente bevorzugte Übergangsmetallverbindungen sind vor allem Acetylacetonate oder Carbonsäuresalze der Elemente Eisen, Cer, Praseodym, Terbium, Lanthan, Wolfram, Osmium und Mangan. Bevorzugt sind die Salze der Carbonsäuren Essig-, Propion-, Butter-, 2-Ethylhexylcarbon-, Stearin- und Palmitinsäure. Besonders bevorzugt sind vor allem die entsprechenden Fe-, Pr-, Mn- und Tb-Verbindungen, wie z.B. Eisen(III)-acetat oder -acetylacetonat, Mangan(III)-acetat oder -acetylacetonat, Praseodym(III)-acetat oder -acetylacetonat oder Terbium(III)-acetat oder -acetylacetonat sowie die entsprechenden Carbonsäuresalze. Die farbgebende Komponente wird vorzugsweise in einer Menge von 0,00001 bis 2,0 Gew.-%, besonders bevorzugt 0,001 bis 1,0 Gew.-% und ganz besonders bevorzugt 0,01 bis 0,5 Gew.-% eingesetzt, bezogen auf die Gesamtmasse der Keramikpartikel (A).

Die Gesamtmenge der Komponente(n) (E) beträgt vorzugsweise 0,1 bis 15 Vol.-%, besonders bevorzugt 0,1 bis 10 Vol.-%, ganz besonders bevorzugt 0,5 bis 9 Vol.-% und insbesondere 1,5 bis 5 Vol.-% bezogen auf die Gesamtzusammensetzung des Schlickers.

Alle Volumenprozentangaben lassen sich, wenn nicht anders angeben, unter Verwendung der Dichte der jeweiligen Komponente in Gewichtsprozent umrechnen.

Üblicherweise hat der Schlicker bei 20 °C eine pastöse bis feste Konsistenz, insbesondere pastös-feste bis feste Konsistenz. So wird eine Sedimentation der Keramikpartikel vermieden und eine hohe Lagerstabilität gewährleistet. Bei 80 °C und einer Scherrate von 1000 s⁻¹ hat er vorzugsweise eine Viskosität von ≤ 200 mPa·s, besonders bevorzugt ≤ 100 mPa·s. Der erfindungsgemäße Schlicker kann vorzugsweise bei entsprechender Temperatur mit einem Inkjet-Drucker, der eine Druckkopfdüse mit einem Durchmesser von etwa 100 µm aufweist, verdruckt werden.

Die erfindungsgemäß verwendeten Schlicker können durch Dispergieren der Keramikpartikel in einem Gemisch aus Wachs, Monomeren und optionalen Additiven dispergiert werden. Das Dispergieren erfolgt vorzugsweise bei einer Temperatur, bei dem das Wachs und vorzugsweise auch die Monomere flüssig sind, vorzugsweise bei 70 bis 110 °C. Gemäß einer weiter bevorzugten Ausführungsform erfolgt das Dispergieren unter Anwendung hoher Scherraten, beispielsweise bei 500 bis 5.000 s⁻¹. Der Füllstoff kann beispielsweise unter Verwendung eines Dissolvers (z. B. Dispermat® der Fa. VMA-Getzmann GmbH, Reichshof, DE) bei Drehzahlen von bis zu 20.000/min, und vorzugsweise bei erhöhter Temperatur von 70 bis 110 °C in dem Gemisch aus Wachs, Monomeren und optionalen Additiven dispergiert werden. Unter diesen Bedingungen werden Agglomerate der bevorzugten Keramikpulver weitgehend in die Primärpartikel zerlegt. Falls die Viskosität im flüssigen Schlicker zu hoch sein sollte, wird sie durch Zugabe von viskositätserniedrigenden Substanzen auf Werte von vorzugsweise ≤ 200 mPa·s reduziert, besonders bevorzugt ≤ 100 mPa·s, gemessen bei einer Scherrate von 1000 s⁻¹ und einer Temperatur von 80 °C.

Es wird ein Grünling aus dem erfindungsgemäßen Schlicker hergestellt, indem man den Schlicker schichtweise in einem Hot-Melt-Inkjet-Druckverfahren zu der geometrischen Form des Grünlings formt und einer radikalischen Polymerisation, besonders bevorzugt Photopolymerisation, unterwirft, um einen gehärteten Grünling zu erhalten. In einer Ausführungsform wird jede einzelne Schicht nach dem Aufdrucken gehärtet. Die Härtung nach jeder einzelnen Schicht ist allerdings nicht zwingend. Vielmehr kann aufgrund der ermittelten Durchhärtungstiefe von 300-500 µm auch nur nach jeder 5. bis 10. Schicht gehärtet werden.

Die Härtung erfolgt vorzugsweise mit Blaulicht in einem Wellenlängenbereich von 300 bis 550 nm, bevorzugt mit einer Lichtleistung von 1000 mW/cm².

Im Detail funktioniert das Hot-Melt-Inkjet-Verfahren beispielsweise so, dass die Tinte, d. h. der Schlicker, in flüssiger Form aus einem Vorratsgefäß in einen Druckkopf transportiert wird, dessen Kernstück eine Kapillare darstellt, die typischerweise in eine als Düse bezeichnete, sehr dünne Kapillarspitze mündet. Der Durchmesser der Düse beträgt beispielsweise 100 µm. Im Falle eines typischerweise verwendeten sogenannten "Drop-on-Demand"-Druckkopfes wird die Kapillare unmittelbar vor der Spitze von einem piezoelektrischen Aktuator umschlossen, der elektrische Impulse als Druckimpulse durch die Kapillarenwände an die in der Kapillare befindliche Tinte weitergibt. Die Druckimpulse lösen in der Tinte Schockwellen aus, die das Ausstoßen von winzigen diskreten Tropfen aus der Kapillarenspitze verursachen. Dies bedeutet, dass eine sehr schnelle Abfolge von Tropfen, nämlich in der Frequenz der piezoelektrischen Impulse generiert werden kann, d.h. in der Größenordnung von einigen Hertz bis zu einigen kHz; die emittierten Tropfen haben dabei typischerweise einen Durchmesser im µm-Bereich und ein Volumen von Nanolitern bis Pikolitern. Erfindungsgemäß sind jedoch auch alle anderen Druckverfahren geeignet, mit denen sich die erfindungsgemäßen Schlicker schichtweise zu Grünlingen formen lassen.

Vorzugsweise wird der erfindungsgemäße Schlicker bei einer Temperatur im Bereich von 60 °C bis 140 °C, besonders bevorzugt von 70 °C bis 120 °C und ganz besonders bevorzugt von 80 °C bis 100 °C verdruckt, wobei damit die Temperatur in der Druckdüse gemeint ist.

Unmittelbar nach Auftreffen der Tropfen auf eine Bauplattform bzw. auf bereits aufgedruckte Schichten, erstarrt die gedruckte Flüssigkeitsmenge. Zusätzlich wird jede Schicht durch Photopolymerisation gehärtet und durch das dadurch entstehende Polymernetzwerk über das gesamte Volumen des Formteils entscheidend stabilisiert.

Gleichzeitig mit dem erfindungsgemäßen Schlicker kann ein leicht entfernbares Stützmaterial verdruckt werden - typischerweise aus einem zweiten Druckkopf -, das anschließend vom gehärteten Grünling, etwa durch selektives Ausschmelzen oder selektives chemisches Lösen des Stützmaterials, entfernt wird.

Der gehärtete Grünling wird dann zum endgültigen Keramikformteil weiterverarbeitet, indem man den Grünling in Schritt (b) einer Wärmebehandlung zur Entfernung des Bindemittels (Entbinderung) unterwirft, um einen Weißling zu erhalten, und man den Weißling anschließend in Schritt (c) sintert.

Bei der Entbinderung (b) wird das verwendete Bindemittel, d. h. das Wachs und die polymerisierten Monomere, sowie gegebenenfalls vorhandene thermisch zersetzbare Additive, durch Erhitzen des Grünlings auf eine Temperatur von vorzugsweise 50 °C bis 600 °C, besonders bevorzugt von 150°C bis 500°C sukzessive entfernt. Ohne an diese Theorie gebunden sein zu wollen, glaubt man, dass das thermische Entfernen wie folgt erfolgt: Das Wachs schmilzt aus und brennt "außerhalb" des Objekts ab, während das Polymernetzwerk noch stabil ist. Bei höheren Temperaturen depolymerisiert und pyrolysiert dieses dann anschließend, ebenso die restlichen gegebenenfalls vorhandenen Additive

Der erhaltene Weißling wird in Schritt (c) zu einem dichten keramischen Formkörper gesintert. Die Sinterung des Weißlings erfolgt im Sinterofen, vorzugsweise bei einer Temperatur für Zirkondioxid von 1100 bis 1600 °C, bevorzugt 1400 bis 1500 °C und für Aluminiumoxid von 1400 bis 1800 °C, bevorzugt 1600 bis 1700 °C.

Ein besonderer Vorteil der erfindungsgemäß verwendeten Schlicker ist, dass der thermische Entbinderungsprozess, also das vollständige Ausbrennen der organischen Bestandteile, aufgrund des erwähnten stabilisierenden Polymernetzwerks ohne Risse und Schäden im Gefüge oder Verlust der Struktur und unter Formerhaltung des keramischen Grünkörpers vonstatten geht. Ein anschließender Sintervorgang führt zu einer Verdichtung von bevorzugt > 98%, bevorzugt > 98,5% und ganz besonders bevorzugt > 99% der theoretischen Dichte der Keramik. Ein mit dem erfindungsgemäß verwendeten Schlicker hergestelltes gesintertes Keramikformteil weist vorzugsweise eine Detailtreue von 100 µm oder besser, vorzugsweise höchstens 50 µm Abweichung von den vorgegebenen Scandaten auf. Die erfindungsgemäßen Schlicker erlauben sogar die schnelle und zeitsparende Durchführung des Entbinderungs- und nachfolgenden Sinterschritts in nur einem Ofenprozess.

Vorzugsweise werden die Schlicker der vorliegenden Erfindung zur Herstellung. eines Inlays, Onlays, Veneers, einer Krone, Brücke oder eines Gerüsts verwendet.

Die Erfindung wird nun anhand von Figuren und eines Beispiels näher erläutert.
Fig. 1 zeigt ein mit erfindungsgemäßem Schlicker im Inkjet-Verfahren hergestelltes Plättchen.
Fig. 2 zeigt das Plättchen aus Fig. 1 in höherer Vergrößerung.
Die Fig. 3 bis 7 zeigen Fotographien gesinterter Plättchen, die im Heißgießverfahren (Niederdruckspritzguss) hergestellt wurden.

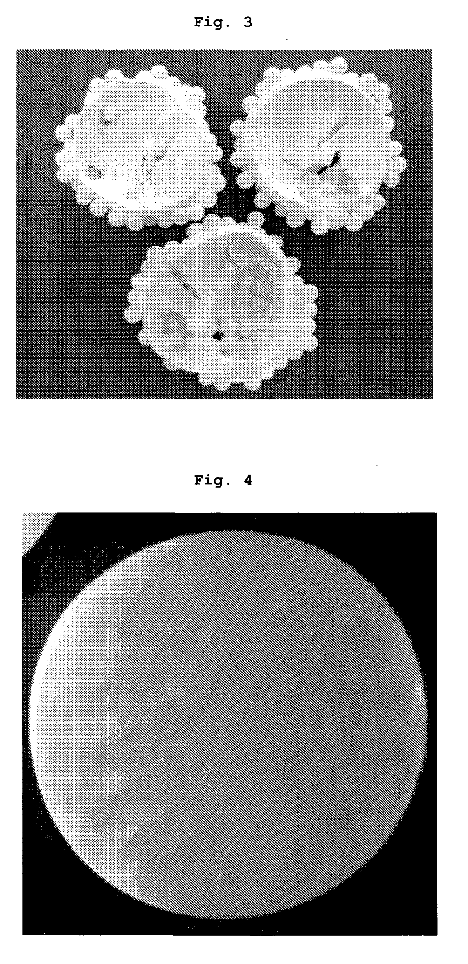

Fig. 3 zeigt Plättchen, die mit einem nicht erfindungsgemäßen Schlicker (enthält kein Monomer (C)) hergestellt wurden.
Fig. 4 zeigt ein Plättchen, das mit einem nicht erfindungsgemäßen Schlicker hergestellt wurden (enthält kein Wachs (B)).

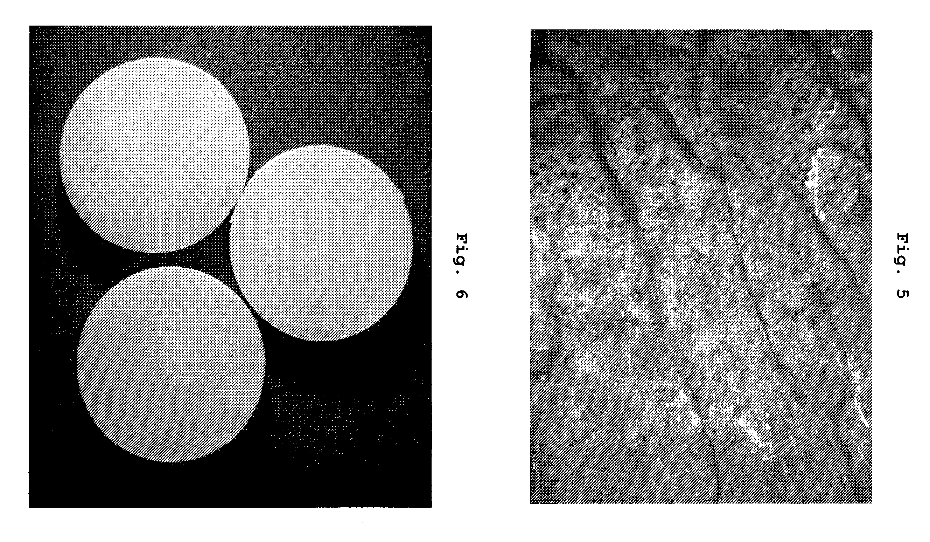

Fig. 5 zeigt die Oberfläche des Plättchens aus Fig. 4.
Fig. 6 zeigt Plättchen aus einem erfindungsgemäßen Schlicker (Beispiel 1).

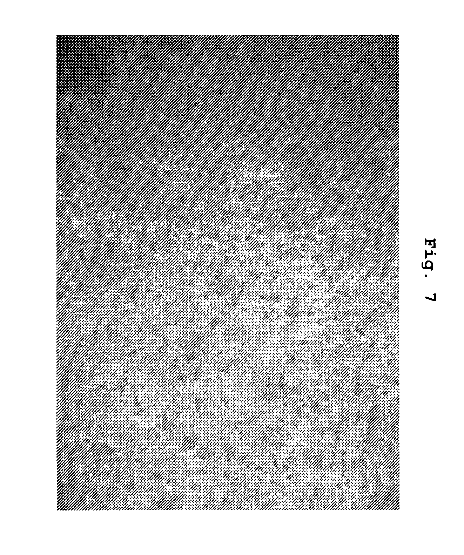

Fig. 7 zeigt die Oberfläche der Plättchen aus Fig. 6.

### Beispiel 1

### Zusammensetzung des Schlickers

| **Komponente** | **Menge** | **Anteil** |
|---|---|---|
| ZrO₂-Partikel | 150 g | (35,7 Vol.-%; 78,2 Gew-%) |
| Paraffinwachs | 20,310 g | (32,7 Vol.%; 10,6 Gew.-%) |
| PPG700DA | 11,858 g | (16,8 Vol.-%; 6,2 Gew.-%) |
| 5-DAMS | 5,442 g | (7,7 Vol.-%; 2,8 Gew.-%) |
| Octadecen | 2,020 g | (3,7 Vol.-%; 1,1 Gew.-%) |
| Hypermer LP-1 | 2,000 | (3,2 Vol.-%; 1,0 Gew.-%; ) |
| TEMPO | 0,001 g | (0,03 Vol.-%; 5 Gew.-ppm) |
| Photoinitiator | 0,03 g | (0,17 Vol.-%; 0,015 Gew.-%) |

### Erläuterung:

- ZrO₂: TZ-3YS-E (commercial grade) von Tosoh Corporation, Tokyo, JP (mit Y₂O₃ stabilisiertes ZrO₂, Primärteilchengröße 300-350 nm)
- Paraffinwachs: Schmelzpunkt 54-56 °C, Viskosität (bei 80°C und einer Scherrate von 1000 s⁻¹) 3-4 mPa·s (Siliplast; Zschimmer & Schwarz, Lahnstein, DE; enthält insges. ca. 0,5 % Emulgator)
- Hypermer LP-1: Dispergierhilfsmittel auf Basis eines mittelkettigen Polyesters (Uniqema, GB.)
- PPG700DA: Polypropylenglykol-700-diacrylat
- 5-DAMS: Pentaerythritdiacrylat-Monostearat
- TEMPO: 2,2,6,6-Tetramethylpiperidinyloxyl
- Photoinitiator: Bis-(4-methoxybenzoyl)diethylgermanium

### Herstellung des Schlickers:

Das Wachs, die Monomere PPG700DA und 5-DAMS, und das Dispergierhilfsmittel wurden bei 70°C in einem Dissolver (Dispermat®, Fa. VMA-Getzmann GmbH, Reichshof, DE) vorgelegt. Bei niedrigen Drehzahlen wurde das ZrO₂-Pulver portionsweise zugegeben. Nachdem alles Pulver eingearbeitet wurde, wurde die Drehzahl auf 20.000 min⁻¹ hochgefahren und es wurde mindestens 30 min gemischt. Die aufgrund der hohen Scherkräfte im System auftretende Erwärmung macht eine externe Heizung dabei unnötig, u. U. ist sogar eine Kühlung nötig. Nach den 30 min intensiven Rührens wird der Schlicker bei leichtem Rühren abgekühlt. Dabei wird, solange der Schlicker noch flüssig ist, Octadecen und TEMPO zugegeben sowie zum Schluss der Photoinitiator. Die Viskosität des Schlickers beträgt bei einer Temperatur von 80 °C und einer Scherrate von 1000 s⁻¹ 103,2 mPa·s.

### Beispiel 2 (Vergleichsbeispiel, enthält keine Monomere)

### Zusammensetzung des Schlickers

| **Komponente** | **Menge** |
|---|---|
| ZrO₂-Partikel | 150 g |
| Paraffinwachs | 32,867 g |
| Octadecen | 5,799 g |
| Hypermer LP-1 | 1,48 g |

Die Herstellung des Schlickers erfolgte analog zu Beispiel 1.

### Beispiel 3 (Vergleichsbeispiel, enthält kein Wachs)

### Zusammensetzung des Schlickers

| **Komponente** | **Gew.-%** |
|---|---|
| Ethoxyliertes Pentaerythrittetraacrylat (EPTA) | 3,50 |
| Urethandiacrylat (aus 2,2,4-Trimethylhexamethylendiisocyanat und Hydroxypropylacrylat) | 3,50 |
| Irgacure 819 (Fa. CIBA-GEIGY) | 0,50 |
| Hexandioldiacrylat | 3,00 |
| Dolacol D 1003 (Fa. Zschimmer&Schwarz) | 3,90 |
| 1-Octanol | 1,50 |
| PEG-300 | 3,00 |
| ZrO₂ 3Y TZP (Fa. Tosoh; enthält 3 mol-% Y₂O₃) | 81,00 |
| Pr(III)-Acetylacetonat | 0,10 |

### Herstellung des Schlickers:

Die oben aufgeführten flüssigen Komponenten wurden vorgelegt und der Photoinitiator Irgacure 819 und das Pr(III)-Acetylacetonat darin unter Rühren gelöst. Anschließend wurde in einem Dissolver Dispermat (Firma VMA) bei 15.000 Umdrehungen/min das mit iso-Buttersäure oberflächenmodifizierte ZrO₂-Pulver 3Y TZP portionsweise so zugeführt und für 30 min dispergiert, bis ein hochgefüllter ZrO₂-Schlicker mit einem Füllgrad von ca. 41 Vol.-% entstand.

### Beispiel 4 - Herstellung von Keramikplättchen durch Inkjet-Verfahren

Zur Herstellung der Probenkörper aus dem erfindungsgemäßen Schlicker (Beispiel 1) wurde kein kommerzieller Tintenstrahldrucker verwendet, sondern ein Laboraufbau basierend auf einem Hochtemperatur-Druckkopf (Typ AD-K 140 der Fa. Microdrop, Norderstedt, DE). Der Druckkopf wurde über einem in drei Raumrichtungen beweglichen Tisch fixiert, der von Präzisionsschrittmotoren gesteuert wird. Der Tisch ist in Z-Richtung absenkbar, wodurch einfache 3D-Objekte herstellbar sind. Der Druckkopf hat ein beheizbares Schlickerreservoir, von wo der Schlicker durch einen initialen geringen Unterdruck in die Düse (= Glaskapillare mit 100 µm Durchmesser in der Spitze) transportiert wird. Die Tropfenemission erfolgt über Druckimpulse des Piezoaktors, der im unteren Bereich der Düse um diese angebracht ist. Unmittelbar vor der Düsenspitze ist ein dünner Golddraht zur Beheizung der Düse angebracht. Mit dieser Anordnung konnte der Schlicker präzise verdruckt werden.

### Prozessparameter:

- T im Reservoir 85°C / Düsenheizung 100°C
- Druck: -18 mbar
- Spannung am Piezo 230 V
- Druckfrequenz (Frequenz der Tropfenabgabe) 100 Hz

Der Aufbau einer Ebene erfolgte durch linienweises Drucken, die nächste Ebene wurde senkrecht dazu gedruckt. Nach jeder dritten Schicht wurde durch Bestrahlen mit Blaulicht gehärtet (20 s, Belichtung mit Ivoclar Bluephase-Blaulichtlampe, manuell). Nach Ende des Druckprozesses wurde das feste Plättchens vom Träger (Glas-Objektträger) entnommen und gemäß dem in Tabelle 1 beschriebenen Temperaturprofil in einem Ofen (Nabertherm-Ofen HTC 08/16) entbindert und gesintert. Die ersten beiden Heizschritte (Entbinderung) wurden unter eingeschalteter Umluft durchgeführt, d.h. Atmosphärenaustausch im Ofen zwecks Abtransport der Pyrolysegase.

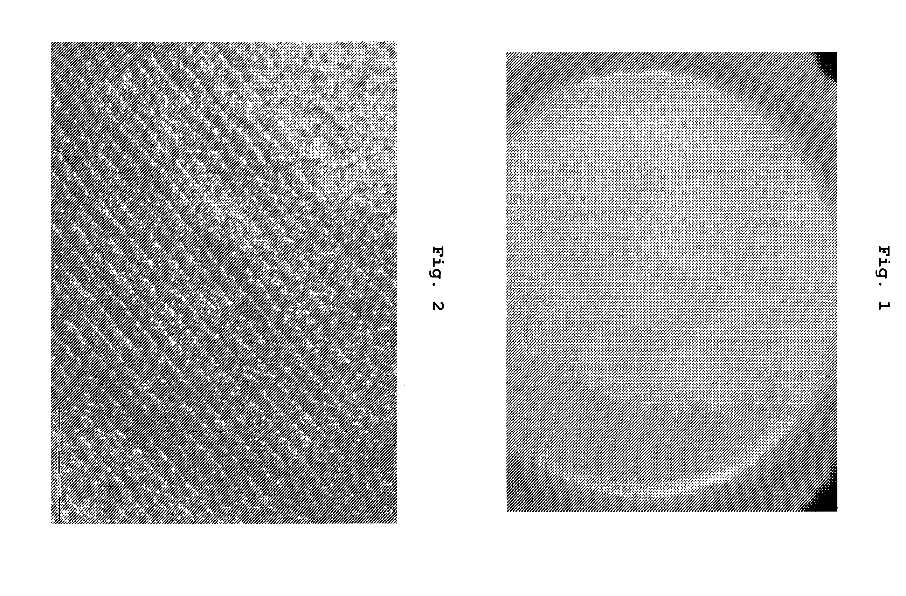

Fig. 1 zeigt ein mit dem Schlicker aus Beispiel 1 hergestelltes Plättchen. Der linienweise Aufbau der obersten Ebene des Plättchens ist gut zu erkennen. Das Plättchen zeigt selbst bei höherer Vergrößerung (Fig. 2) weder Risse noch sonstige Defekte wie Poren und dergleichen.

**Tabelle 1**

| **T-Programm im Nabertherm Kombiofen** | | | | |
|---|---|---|---|---|
| **Starttemp. [°C]** | **Zieltemp. [°C]** | **Zeit [min]** | **Heizrate [°C / min]** | **Haltezeit [min]** |
| 30 | 200 | 17 | 10,0 | 10 |
| 200 | 500 | 150 | 2,0 | 30 |
| 500 | 1100 | 20 | 30,0 | 5 |
| 1100 | 1350 | 25 | 10,0 | 0 |
| 1350 | 1500 | 5 | 30, 0 | 30 |
| 1500 | 800 | 35 | 20,0 | 0 |
| 800 | 30 | 30 | 25,7 | 0 |
| | | | Gesamtprozesszeit: | 357,0 |

### Beispiel 5 - Herstellung von Keramikplättchen durch Heißgießen

Aus dem erfindungsgemäßen Schlicker (Beispiel 1) und den Schlickern gemäß den Vergleichsbeispielen 2 und 3 wurden im Heißgießverfahren (Niederdruckspritzguss) Plättchen mit einem Durchmesser von 20 mm und einer Höhe 1,7 mm (im Grünzustand) hergestellt. Die Plättchen aus den Schlickern der Beispiele 1 und 3 wurden durch Bestrahlen mit Blaulicht gehärtet (2 x 60 s, Belichtung mit Ivoclar Bluephase-Blaulichtlampe). Anschließend wurden die Plättchen unter Atmosphäre nach dem in Tabelle zusammengefassten Temperaturprofil auf einem Kugelbett (ZrO₂-Kugeln von 2 mm Durchmesser) entbindert und gesintert.

**Tabelle 2**

| **Starttemp. [°C]** | **Zieltemp. [°C]** | **Zeit [min]** | **Heizrate [°C / min]** | **Haltezeit [min]** |
|---|---|---|---|---|
| 30 | 500 | 470 | 1,0 | 90 |
| 500 | 1100 | 40 | 15,0 | 0 |
| 1100 | 1350 | 71 | 3,5 | 0 |
| 1350 | 1500 | 30 | 5, 0 | 30 |
| 1500 | 800 | 35 | 20,0 | 0 |
| 800 | 30 | 30 | 25,7 | 0 |
| | | | Gesamtprozesszeit: | 796,0 |

Die Fig. 3 bis 7 zeigen Fotographien der gesinterten Plättchen.

Fig. 3 zeigt Plättchen gemäß Vergleichsbeispiel 2 mit reiner Wachsmatrix. Hier ist klar ersichtlich, dass beim Erhitzen das Wachs ins Kugelbett ausfließt und die Struktur des Objekts vollständig verloren geht. Bei höheren Temperaturen versintern die Kugeln mit der Probe. Ähnliche Ergebnisse sind zu erwarten, wenn die Keramikformkörper, die gemäß der Offenbarung aus Kitty et al. (J. Am. Ceram. Soc. 84 [11], 2514-2520 (2001) hergestellt werden und die ebenfalls eine reine Wachmatrix aufweisen, entbindert und gesintert werden.

Fig. 4 zeigt Plättchen gemäß Vergleichsbeispiel 3, die aus einem nur die Monomere enthaltenden Schlicker hergestellt wurden. Fig. 5 zeigt die Oberfläche dieser Plättchen. Die Geometrie der Plättchen bleibt erhalten, jedoch ist das gesamte Volumen von feinen, während der Entbinderung entstandenen Rissen durchzogen. Fig. 6 zeigt Plättchen aus dem erfindungsgemäßen Schlicker (Beispiel 1) und Fig. 7 deren Oberfläche. Bei thermischem Entbindern können die Wachskomponenten ausfließen, während die Struktur durch das Polymernetzwerk gehalten wird. Nach dem Entbindern und Sintern ist die dreidimensionale Struktur der Probe erhalten, Oberfläche und Gefüge sind homogen und es sind keinerlei durch den Entbinderungsprozess bedingten Risse erkennbar. Die Enddichte der gesinterten Plättchen betrug 6,063 g/cm⁻³, entsprechend 99,55% der theoretischen Dichte.

Die Weiterverarbeitung der gegossenen Plättchen zum gesinterten Endprodukt macht deutlich, dass sich der erfindungsgemäße Schlicker ausgezeichnet entbindern und sintern lässt.

## Patentansprüche

1. Verwendung eines Schlickers enthaltend
(A) Keramikpartikel,
(B) Wachs und
(C) mindestens ein radikalisch polymerisierbares Monomer
zur Herstellung von Keramikformteilen mit einem Hot-Melt-Inkjet-Druckverfahren, wobei es sich bei den Keramikformteilen um Dentalrestaurationen handelt.

2. Verwendung nach Anspruch 1, wobei der Schlicker ferner (D) Initiator für die radikalische Polymerisation enthält.

3. Verwendung nach Anspruch 1 oder 2, wobei der Schlicker
(A) 25 bis 45 Vol.-% Keramikpartikel,
(B) 25 bis 50 Vol.-% Wachs,
(C) 10 bis 40 Vol.-% eines oder mehrerer polymerisierbarer Monomere,
(D) 0,001 bis 3 Vol.-% Initiator für die radikalische Polymerisation, und ggf.
(E) 0,1 bis 15 Vol.-% weitere Additve
enthält, jeweils bezogen auf die Gesamtzusammensetzung des Schlickers.

4. Verwendung nach einem der vorstehenden Ansprüche, wobei der Schlicker als Komponente (A) Oxidkeramikpartikel enthält.

5. Verwendung nach Anspruch 4, wobei der Schlicker als Komponente (A) Oxidkeramikpartikel auf der Basis von ZrO₂ und/oder Al₂O₃, insbesondere Oxidkeramikpartikel aus reinem ZrO₂, reinem Al₂O₃, reinem ZrO₂-Al₂O₃, ZrO₂ oder ZrO₂-Al₂O₃, das mit CaO, Y₂O₃, CeO₂ und/oder MgO stabilisiert ist, enthält.

6. Verwendung nach einem der vorstehenden Ansprüche, wobei der Schlicker als Komponente (B) ein petrochemisches Wachs, insbesondere ein Paraffinwachs, enthält.

7. Verwendung nach einem der vorstehenden Ansprüche, wobei der Schlicker als Komponente (C) mindestens ein Monomer enthält, das ein oder mehrere (Meth)acryloyloxy-Gruppen aufweist.

8. Verwendung nach Anspruch 7, wobei der Schlicker als Komponenten (C) mindestens ein Monomer enthält, das ist ausgewählt aus Acrylaten und Diacrylaten mit einer Kettenlänge des Alkoholrests von C₈ bis C₁₈; mehrfach acrylierten Glykolen, insbesondere mehrfach acrylierten Propylenglykolen; mehrfach acrylierten kurz- bis mittelkettigen Polypropylenglykolen und Pentaerythritdiacrylat-Monocarboxylaten mit einer Kettenlänge von C₈ bis C₁₈.

9. Verwendung nach einem der vorhergehenden Ansprüche, wobei die Dentalrestauration ein Inlay, Onlay, Veneer, eine Krone, Brücke oder ein Gerüst ist.

10. Verfahren zur Herstellung einer Dentalrestauration, bei dem man
(a) einen Schlicker gemäß einem der Ansprüche 1 bis 8 durch schichtweises Hot-Melt-Inkjet-Drucken zu der geometrischen Form des Grünlings formt und einer radikalischen Polymerisation unterwirft, um einen gehärteten Grünling zu erhalten
(b) man dann den Grünling einer Wärmebehandlung zur Entfernung des Bindemittels (Entbinderung) unterwirft, um einen Weißling zu erhalten, und
(c) man den Weißling dichtsintert.

11. Verfahren nach Anspruch 10, bei dem der Schlicker bei einer Temperatur im Bereich von 60 °C bis 140 °C verdruckt wird.

## Claims

1. Use of a slip comprising
(A) ceramic particles
(B) wax and
(C) at least one radically polymerisable monomer
for preparing ceramic compacts in a hot-melt inkjet printing process, wherein said ceramic compacts relate to dental restorations.

2. Use according to claim 1, wherein the slip further comprises (D) initiator for the radical polymerisation.

3. Use according to claim 1 or 2, wherein the slip comprises
(A) 25 to 45% by vol. ceramic particles,
(B) 25 to 50% by vol. wax,
(C) 10 to 40% by vol. one or more polymerisable monomers,
(D) 0.001 to 3% by vol. initiator for the radical polymerisation, and optionally
(E) 0.1 to 15% by vol. further additives
in each case relative to the total composition of the slip.

4. Use according to one of the preceding claims wherein the slip comprises oxide ceramic particles as the component (A).

5. Use according to claim 4 wherein the slip comprises oxide ceramic particles based on ZrO₂ and/or Al₂O₃, in particular oxide ceramic particles of pure ZrO₂, pure Al₂O₃, pure ZrO₂-Al₂O₃, ZrO₂ or ZrO₂-Al₂O₃ which is stabilised with CaO, Y₂O₃, CeO₂ and/or MgO, as the component (A).

6. Use according to one of the preceding claims wherein the slip comprises a petrochemical wax, in particular a paraffin wax, as the component (B).

7. Use according to one of the preceding claims wherein the slip comprises at least one monomer that has one or more (meth)acryloyloxy groups as the component (C).

8. Use according to claim 7 wherein the slip comprises at least one monomer that is selected from acrylates and diacrylates with a chain length of the alcohol residue of C₈ to C₁₈; polyacrylated glycols, in particular polyacrylated propylene glycols; polyacrylated short- to medium-chain polypropylene glycols and pentaerythritoldiacrylate monocarboxylates with a chain length of C₈ to C₁₈ as the component (C).

9. Use of a slip according to one of the preceding claims wherein the dental restoration is an inlay, onlay, veneer, a crown, bridge or a framework.

10. Process for the preparation of a dental restoration, in which process
(a) a slip according to one of claims 1 to 8 is moulded in layers by hot-melt ink jet printing to the geometrical shape of the green compact and subjected to a radical polymerisation in order to obtain a cured green compact
(b) the green compact is then subjected to a heat treatment to remove the binding agent (debinding), in order to obtain a white body, and
(c) the white body is dense sintered.

11. Process according to claim 10, in which the slip is pressed at a temperature in the range of 60 °C to 140 °C.

## Revendications

1. Utilisation d'une barbotine, contenant
(A) des particules céramiques,
(B) de la cire et
(C) au moins un monomère polymérisable par voie radicalaire, pour fabriquer des pièces moulées en céramique par un procédé d'impression par injection de matière thermofusible, les pièces moulées en céramique étant des restaurations dentaires.

2. Utilisation selon la revendication 1, où la barbotine contient en outre (D) un initiateur pour la polymérisation radicalaire.

3. Utilisation selon la revendication 1 ou 2, où la barbotine contient
(A) 25 à 45 % en vol. de particules céramiques,
(B) 25 à 50 % en vol. de cire,
(C) 10 à 40 % en vol. d'un ou plusieurs monomères polymérisables,
(D) 0,001 à 3 % en vol. d'un initiateur pour la polymérisation radicalaire, et éventuellement
(E) 0,1 à 15 % en vol. d'autres additifs,
chaque fois rapporté à la composition totale de la barbotine.

4. Utilisation selon l'une des revendications précédentes, où la barbotine contient des particules de céramique d'oxyde en tant que constituant (A).

5. Utilisation selon la revendication 4, où la barbotine contient, en tant que constituant (A), des particules de céramique d'oxyde à base de ZrO₂ et/ou Al₂O₃, notamment des particules de céramique d'oxyde en ZrO₂ pur, Al₂O₃ pur, ZrO₂-Al₂O₃ pur, ZrO₂ ou ZrO₂-Al₂O₃ qui est stabilisé au CaO, Y₂O₃, CeO₂ et/ou MgO.

6. Utilisation selon l'une des revendications précédentes, où la barbotine contient, en tant que constituant (B), une cire pétrochimique, notamment une cire de paraffine.

7. Utilisation selon l'une des revendications précédentes, où la barbotine contient, en tant que constituant (C), au moins un monomère qui présente un ou plusieurs groupes méthacryloyle-oxy.

8. Utilisation selon la revendication 7, où la barbotine contient, en tant que constituant (C), au moins un monomère qui est choisi parmi des acrylates et des diacrylates avec une longueur de chaîne du reste d'alcool allant de C₈ à C₁₈; des glycols à acrylisation multiple, notamment des propylèneglycols à acrylisation multiple; des polypropylèneglycols à acrylisation multiple, à chaîne courte à moyenne, et pentaérythritol-diacrylate-monocarboxylates avec une longueur de chaîne allant de C₈ à C₁₈.

9. Utilisation selon l'une des revendications précédentes, où la restauration dentaire est un inlay, un onlay, une facette pelliculaire, une couronne, un bridge ou une infrastructure.

10. Procédé de fabrication d'une restauration dentaire, selon lequel
(a) on façonne une barbotine selon l'une des revendications 1 à 8, par impression par injection de matière thermofusible en couches pour obtenir la forme géométrique du corps cru, et on la soumet à une polymérisation radicalaire afin d'obtenir un corps vert durci;
(b) on soumet ensuite le corps vert à un traitement thermique pour éliminer le liant, en vue d'obtenir un corps blanc, et
(c) on soumet le corps blanc à un frittage à densité maximale.

11. Procédé selon la revendication 10, selon lequel la barbotine est imprimée à une température située dans la plage allant de 60 °C à 140 °C.
